# EUROPÄISCHE PATENTSCHRIFT

(11) **EP 0 937 869 B1**
(45) Veröffentlichungstag und Bekanntmachung des Hinweises auf die Patenterteilung: **02.08.2000**
(21) Anmeldenummer: 98100275.1
(22) Anmeldetag: 09.01.1998
(51) Int. Cl.: F01N 3/08, F01N 3/20

(54) **Temperaturüberwachung einer Abgasanlage mit Kühlschleife für Verbrennungskraftmaschinen**
Temperature monitoring of an exhaust apparatus with cooling loop for combustion engines
Surveillance de température d'un dispositif d'échappement avec circuit de refroidissement pour moteurs à combustion

(43) Veröffentlichungstag der Anmeldung: 25.08.1999
(73) Patentinhaber: Ford Global Technologies, Inc., Dearborn, Michigan 48126 (US)
(72) Erfinder: Dickers, Guido, 41068 Mönchengladbach (DE); Himmelsbach, Johann, 51789 Lindlar (DE); Grieser, Klemens, 40764 Langenfeld (DE); Phlips, Patrick, 50858 Köln (DE)
(74) Vertreter: Messulam, Alec Moses

(56) Entgegenhaltungen:
- DE-A- 19 522 165
- DE-C- 19 628 796
- US-A- 3 050 935
- PATENT ABSTRACTS OF JAPAN vol. 097, no. 012, 25.Dezember 1997 & JP 09 209746 A (TOYOTA MOTOR CORP), 12.August 1997,
- PATENT ABSTRACTS OF JAPAN vol. 017, no. 346 (M-1437), 30.Juni 1993 & JP 05 044454 A (MITSUBISHI HEAVY IND LTD), 23.Februar 1993,

## Beschreibung

Die Erfindung betrifft eine Temperaturüberwachung einer Abgasanlage mit Kühlschleife bei einem Kraftfahrzeug mit einer im Frontbereich angeordneten Verbrennungskraft-maschine bei der die Abgase über einen Katalysator und eine Stickoxidfalle zum Heckbereich des Fahrzeuges geführt werden, wobei die Abgasleitungen der einzelnen Zylinder auf einer Seite der Verbrennungskraftmaschine in einer Sammelleitung zusammengefaßt sind, von der zwei Zuleitungen mit unterschiedlichem Querschnitt zum Katalysator führen und die Zuleitung mit dem größeren Querschnitt durch ein Absperrventil absperrbar ist.

Um eine rasche Aufheizung des Katalysators nach einem Start der Verbrennungskraftmaschine sicherzustellen, ohne daß bei Dauerbetrieb des Kraftfahrzeuges die notwendige Kühlung für die Zuleitung der Abgase zum Katalysator unterbleibt, weisen die Zuleitungen für die Abgase zum Katalysator unterschiedliche Längen auf. Die Zuleitung mit dem größeren Querschnitt ist unterhalb der Verbrennungs-kraftmaschine in Fahrtrichtung des Kraftfahrzeuges vor und unter der Verbrennungskraft-maschine angeordnet. Sie weist einen bogenförmigen Bereich auf und von dort verläuft die Abgasleitung entgegen der Fahrtrichtung zu dem unterhalb des Passagierraumes angeordneten Katalysator. Die Zuleitung mit dem geringeren Querschnitt stellt eine kurze Verbindung zwischen einem Bereich der Sammelleitung nahe einem Entkopplungselement und einem dem Katalysator benachbarten Bereich der Abgasleitung her.

Durch diese Anordnung wird erreicht, daß das sogenannte Package innerhalb des Kraftfahrzeuges für die Abgasleitung und den Katalysator positiv gelöst werden kann; die Verbindungsleitung mit dem größeren Querschnitt liegt in einem Bereich des Kraftfahrzeuges, in dem eine optimale Kühlung möglich ist. Trotzdem wird bei einer Inbetriebnahme des Kraftfahrzeuges durch Absperren der Zuleitung mit größerem Querschnitt die Zuleitung mit geringem Querschnitt, die zudem noch in kurzer Länge ausgeführt werden kann, für eine rasche Aufheizung des Katalysators sorgen.

Aus DE 195 22 165 ist eine Vorrichtung und ein Verfahren für die Regelung einer Verbrennungskraftmaschine bekannt, wobei an der Brennkraftmaschine ein Katalysator und ein NOx Absorber sowie ein ein Absperrventil und eine als Kühlfläche dienende Kühlschleife vorgesehen sind. Es wird die Temperatur des NOx Absorbers gemessen und mit einem Sollwert verglichen. Sobald der NOx Absorber gereinigt werden muß, wird das Absperrventil geöffnet, wodurch die heißen Abgase auf kurzem Weg den NOx Absorbern zugeleitet werden, und sobald die notwendige Regenerationstemperatur des Absorbers erreicht ist, wird das Gemisch angereichert, damit unverbranntes HC mit dem Abgas zur Regeneration des Absorbers diesem zugeführt wird.

Sowohl die rasche Aufheizung des Katalysators als auch die Kühlung des Abgases bei dem weiteren Betrieb des Fahrzeuges hängt von der ungestörten Funktion der Kühlschleife und des Absperrventils ab.

Aufgabe der Erfindung war es, die Zuverlässigkeit und Empfindlichkeit der Temperaturüberwachung zu verbessern.

Diese Aufgabe wird gelöst, mit den Merkmalen gemäß Anspruch 1.

Durch die festgelegten Betriebsbedingungen der Verbrennungskraftmaschine wird ein Betriebszustand definiert, der bei der gewählten Stellung des Absperrventils an der Temperaturmeßstelle einen vorherbestimmbaren Sollwert bewirken müßte. Die Größe des Sollwertes kann durch vorherige Versuche ermittelt und zusammen mit den Betriebsbedingungen der Verbrennungskraftmaschine in der entsprechenden Steuerungseinheit abgelegt werden.

Es ist insbesondere vorgesehen, daß bei Vollastbetrieb der Verbrennungskraftmaschine und bei vollständig geöffnetem Absperrventil die Temperatur an der Stickoxidfalle bestimmt und mit einem oberen Grenzwert verglichen wird.

Durch die doppelte Temperaturbestimmung wird die Zuverlässigkeit der Temperaturüberwachung erhöht. Insbesondere aus dem zeitlichen Verlauf beider Temperatursignale können Rückschlüsse auf die Kühlfunktion der Kühlschleife und auf die Funktion des Absperrventils vorgenommen werden.

Außerdem wird durch die Differenzbildung die Empfindlichkeit der Temperaturüberwachung verbessert.

Weiter bevorzugt ist vorgesehen, daß einer der vorbeschriebenen Sollwerte adaptiv unter Berücksichtigung
- der Drehzahl der Verbrennungskraftmaschine.
- der Last an der Verbrennungskraftmaschine
- der Kraftfahrzeuggeschwindigkeit
- der Umgebungstemperatur
- des Luft- /Kraftstoffverhältnisses
oder einer beliebigen Kombination davon festgelegt wird.

Durch die Berücksichtigung von Einflußgrößen auf die Abgastemperatur mittels einer Adaption des Sollwertes wird die Zuverlässigkeit der Temperaturüberwachung erhöht.

Die Temperaturüberwachung kann nicht nur dazu verwendet werden, bei einer Störung einen Wartungshinweis an den Fahrer zu geben, sondern bevorzugt auch angewendet werden, um einer Überhitzung des Katalysators und/oder der Stickoxidfalle vorzubeugen.

Nach Anspruch 1 ist eine Anwendung der Temperaturüberwachung daher die Beeinflussung der Gemischeinstellung. Dazu wird bei Überschreiten des Sollwertes das Gemisch angereichert.

Alternativ oder zusätzlich wird die Temperaturüberwachung zur Beeinflussung der Ansaugluftmenge angewendet. Dazu wird bei Überschreiten des Sollwertes die Steuerung der elektronischen Drosselklappe beeinflußt.

Sowohl für die Anreicherung des Gemisches als auch für die Beeinflussung der Drosselklappenstellung wird die Abweichung vom Sollwert als Regelgröße vorgesehen.

## Patentansprüche

1. Temperaturüberwachung einer Abgasanlage mit Kühlschleife für Verbrennungskraftmaschine, wobei in der Abgasanlage ein Katalysator und eine Stickoxidfalle angeordnet sind und die Kühlfläche durch ein Absperrventil steuerbar ist, bei festgelegten Betriebsbedingungen der Verbrennungskraftmaschine das Absperrventil auf einen vorgegebenen Wert eingestellt und die Temperatur am Ausgang des Katalysators und die Temperatur an der Stickoxidfalle bestimmt wird,
dadurch gekennzeichnet,
daß aus den Temperaturen kontinuierlich eine Differenzfunktion gebildet und mit einer Sollwertfunktion verglichen wird, und daß bei Überschreiten des Sollwertes das Gemisch angereichert oder die Stellung der elektronischen Drosselklappe beeinflusst wird.

2. Temperaturüberwachung nach Anspruch 1,
**dadurch gekennzeichnet,** daß
- der Sollwert der Temperatur adaptiv unter Berücksichtigung der Drehzahl und Last der Verbrennungskraftmaschine, der Fahrgeschwindigkeit, der Umgebungstemperatur und des Luft-/Kraftstoff-Verhältnisses festgelegt wird.

## Revendications

1. Surveillance de température d'un système d'échappement à boucle de refroidissement pour moteur à combustion interne, un catalyseur et un piège d'oxydes d'azote étant disposés dans le système d'échappement et la surface de refroidissement pouvant être commandée par une soupape d'isolement, surveillance selon laquelle on règle la soupape d'isolement à une valeur prédéfinie pour des conditions de fonctionnement établies du moteur à combustion interne, et on détermine la température à la sortie du catalyseur ainsi que la température au piège d'oxydes d'azote,
**caractérisée** en ce qu'on forme en continu à partir des températures une fonction différentielle et on la compare à une fonction de valeur de consigne, et en ce que, en cas de dépassement de la valeur de consigne, on enrichit le mélange ou on modifie la position du papillon électronique.

2. Surveillance de température selon la revendication 1, **caractérisée** en ce que la valeur de consigne de température est définie de façon adaptative en tenant compte du régime et de la charge du moteur à combustion interne, de la vitesse de marche, de la température ambiante et du rapport air-carburant.

## Claims

1. Temperature monitoring of an exhaust gas unit with cooling loop for internal combustion engine, a catalyst and a nitrogen oxide trap being arranged in the exhaust gas unit and the cooling surface being controllable by means of a shut-off valve, the shut-off valve being set to a pre-determined value at specified operating conditions of the internal combustion engine and the temperature at the outlet of the catalyst and the temperature at the nitrogen oxide trap being determined,
characterised in that
a difference function is continuously formed from the temperatures and is compared with a desired value, and in that if the desired value is exceeded the mixture is enriched or the setting of the electronic throttle valve is influenced.

2. Temperature monitoring according to Claim 1,
characterised in that
- the desired value of the temperature is adaptively specified on the basis of the rotational speed and load of the internal combustion engine, the travelling speed, the ambient temperature and the air/fuel ratio.
